# EUROPÄISCHE PATENTSCHRIFT

(11) **EP 1 797 379 B1**
(45) Veröffentlichungstag und Bekanntmachung des Hinweises auf die Patenterteilung: **16.07.2008**
(21) Anmeldenummer: 05794677.4
(22) Anmeldetag: 30.09.2005
(51) Int. Cl.: F25D 3/10, A01N 1/00, F17C 3/08, G01N 1/42

(54) **KRYOEINRICHTUNG UND ZUGEHÖRIGES BETRIEBSVERFAHREN**
CRYO-DEVICE AND ASSOCIATED OPERATIONAL METHOD
DISPOSITIF CRYOGENIQUE ET PROCEDE PERMETTANT DE FAIRE FONCTIONNER LEDIT DISPOSITIF

(30) Priorität: 01.10.2004 DE 102004047965
(43) Veröffentlichungstag der Anmeldung: 20.06.2007
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko c/o IBMT Fraunhofer Institut Biomedizinische Technik, 66386 St. Ingbert (DE); OH, Young-Joo, 66111 Saarbrücken (DE); SCHÖN, Uwe, 66540 Neunkirchen (DE)
(74) Vertreter: Beier, Ralph
(86) Internationale Anmeldenummer: PCT/EP2005/054947
(87) Internationale Veröffentlichungsnummer: WO 2006/037760

(56) Entgegenhaltungen:
- US-A- 4 480 682
- US-A- 4 783 973
- US-A- 5 715 686
- US-A- 6 065 294

## Beschreibung

Die Erfindung betrifft eine Kryoeinrichtung zum Einfrieren und Auftauen einer Probe, insbesondere bei der Kryokonservierung einer biologischen Probe, sowie ein zugehöriges Betriebsverfahren gemäß dem Oberbegriff der nebengeordneten Ansprüche.

Bei der bekannten Kryokonservierung werden biologische Proben vitalitätserhaltend eingefroren und später bei Bedarf wieder vitalitätserhaltend aufgetaut. Anwendungsbeispiele für eine solche Kryokonservierung sind die Einlagerung von Embryonen für die Stammzellforschung oder die Aufbewahrung von Spermien für eine spätere künstliche Befruchtung. Wichtig für die Vitalitätserhaltung bei der Kryokonservierung ist es, dass sowohl beim Einfrieren als auch beim Auftauen der biologischen Proben ein vorgegebener zeitlicher Temperaturverlauf eingehalten wird.

Zur Kryokonservierung biologischer Proben werden deshalb sogenannte Einfrierautomaten eingesetzt, die als Kühlmittel meist flüssigen Stickstoff mit einem Siedepunkt von -196°C einsetzen und einen Kühlraum aufweisen, in dem die Temperatur durch eine Steuerung der Zufuhr des Kühlmittels eingestellt werden kann, um den gewünschten zeitlichen Temperaturverlauf beim Einfrieren bzw. Auftauen biologischer Proben zu erreichen.

Beim Einfrieren der biologischen Proben werden diese in den Kühlraum des Einfrierautomaten eingeführt und anschließend entsprechend dem vorgegebenen zeitlichen Temperaturverlauf von einer Starttemperatur eines Einfrierprozesses bis auf eine Zieltemperatur des Einfrierprozesses abgekühlt. Nach dem Erreichen der Zieltemperatur des Einfrierprozesses werden die eingefrorenen biologischen Proben dann aus dem Kühlraum des Einfrierautomaten entnommen und beispielsweise in einem Kryotank gelagert.

Beim Auftauen gefrorener biologischer Proben werden diese beispielsweise aus einem Kryotank entnommen und in den Kühlraum des Einfrierautomaten eingeführt. Anschließend wird die Temperatur der eingefrorenen biologischen Probe entsprechend einem vorgegebenen zeitlichen Temperaturverlauf von einer bestimmten Starttemperatur eines Auftauprozesses bis auf eine Zieltemperatur des Auftauprozesses angehoben. Nach dem Erreichen der Zieltemperatur des Auftauprozesses wird die aufgetaute Probe aus dem Kühlraum des Einfrierautomaten entnommen und weiter verwendet.

Ein Nachteil der vorstehend beschriebenen bekannten Einfrierautomaten besteht darin, dass die Probe beim Einführen in den Kühlraum und bei der Entnahme aus dem Kühlraum unerwünschten Temperatureinflüssen ausgesetzt ist, was die biologische Probe thermisch schädigen und das Ziel der Vitalitätserhaltung beeinträchtigen kann.

Nachteilig an den vorstehend beschriebenen bekannten Einfrierautomaten ist weiterhin die unbefriedigende Genauigkeit bei der Einstellung des vorgegebenen zeitlichen Temperaturverlaufs beim Einfrieren bzw. Auftauen, was durch das relativ große Volumen des Kühlraums und die damit verbundenen regelungstechnischen Probleme verursacht wird.

Die Entgegenhaltungen DE 101 44 925 A1, EP 0 181 235 B1, EP 0 136 014 B1, DE 31 25 345 A1, DE 34 04 937 C2, EP 0 275 829 A2, EP 0 090 599 A1, EP 0 072 225 B1 und DE 103 32 799 A1 offenbaren Kryoeinrichtungen zum Auftauen bzw. Einfrieren von Kryoproben. Bei diesen bekannten Kryoeinrichtungen wird die Kryoprobe beim Einfrieren bzw. Auftauen jedoch thermisch ungeschützt in den Kühlraum eingebracht bzw. daraus entnommen, was zu einer thermischen Beeinträchtigung der Kryoprobe führen kann.

US 4 783 973 offenbart eine Kryoeinrichtung mit einem kühlbaren Kühlraum mit einem in dem Kühlraum angeordneten Probenbehälter zur Aufnahme der Probe, wobei der Probenbehälter durch eine Widerstandsheizung getrennt von dem Kühlraum temperierbar ist. Der Probenbehälter dient hierbei jedoch nicht zur vorübergehenden Aufnahme der Probe beim Einfrieren oder Auftauen, sondern zur Lagerung der Probe im eingefrorenen Zustand. Diese Druckschrift offenbart also keinen thermisch isolierten, entnehmbaren Transportbehälter, der dazu dient, die Probe in den Kühlraum einzuführen bzw. daraus zu entnehmen.

US 6 065 294 offenbart einen Transportbehälter, der in einen Kühlraum eingeführt bzw. daraus entnommen werden kann. Aus dieser Druckschrift jedoch nicht bekannt, zum Einfrieren oder Auftauen der Probe zusätzlich einen separaten Probenbehälter vorzusehen.

Ferner offenbart US 5 715 686 lediglich einen einzigen Behälter. Aus dieser Druckschrift ist jedoch nicht bekannt, einen unabhängig temperierbaren Probenbehälter und einen zusätzlichen Transportbehälter vorzusehen.

Schließlich ist zum Stand der Technik noch auf die ferner liegende Druckschrift US 4 480 682 hinzuweisen.

Der Erfindung liegt deshalb die Aufgabe zugrunde, eine verbesserte Kryoeinrichtung zum Einfrieren und/oder Auftauen einer Probe und ein entsprechendes Betriebsverfahren zu schaffen.

Diese Aufgabe wird durch eine Kryoeinrichtung und ein entsprechendes Betriebsverfahren gemäß den Ansprüchen 1 und 17 gelöst.

Die Erfindung umfasst die allgemeine technische Lehre, in dem relativ großen Kühlraum einer Kryoeinrichtung (z.B. eines Einfrierautomaten) einen Probenbehälter anzuordnen, in dem die Probe eingefroren und/oder aufgetaut wird, wobei der Probenbehälter getrennt von dem Kühlraum temperierbar ist. Dies bedeutet, dass in dem Probenbehälter und in dem Kühlraum unterschiedliche Temperaturen eingestellt werden können.

Zum einen bietet die getrennte Einstellbarkeit der Temperatur in dem Probenbehälter den Vorteil, dass der für die Vitalitätserhaltung der biologischen Probe wichtige zeitliche Temperaturverlauf beim Einfrieren bzw. Auftauen nur für das kleinere Volumen innerhalb des Probenbehälters eingestellt werden muss, was regelungstechnisch wesentlich genauer möglich ist als die exakte Temperierung des gesamten Kühlraums des Einfrierautomaten.

Zum anderen bietet die getrennte Einstellbarkeit der Temperatur in dem Probenbehälter unabhängig von dem sonstigen Kühlraum den Vorteil, dass beim Einführen und bei der Entnahme der Probe die vorstehend beschriebenen störenden und vitalitätsschädigenden Temperatureinwirkungen vermeidbar sind, die durch Abweichungen von der vorgegebenen Start- bzw. Zieltemperatur resultieren.

Ferner ist zu erwähnen, dass in dem Kühlraum ein entnehmbarer, thermisch isolierter Transportbehälter angeordnet ist, um die Probe nach dem Einfrieren aus dem Kühlraum zu entnehmen oder zum Auftauen in den Kühlraum einzuführen. Zu Beginn eines Auftauprozesses wird die Probe dann aus dem Transportbehälter entnommen und in den Probenbehälter überführt, wo die Probe dann aufgetaut wird. In gleicher Weise wird die Probe am Ende eines Einfrierprozesses aus dem Probenbehälter entnommen und in den Transportbehälter überführt, der dann aus dem Kühlraum entnommen und beispielsweise in einem Kryotank eingelagert werden kann

Die erfindungsgemäße Kryoeinrichtung weist vorzugsweise eine Hebeeinrichtung auf, durch die der Probenbehälter in dem Kühlraum gesteuert oder geregelt abgesenkt und/oder angehoben werden kann.

Zum einen ermöglicht diese vertikale Bewegung des Probenbehälters in dem Kühlraum eine Berücksichtigung der vertikalen Temperaturschichtung in dem Kühlraum. So nimmt die Temperatur in dem Kühlraum von oben nach unten ab, so dass der Probenbehälter am Ende eines Einfrierprozesses vorzugsweise abgesenkt ist, damit die eingefrorene Probe ohne störende Temperatureinwirkungen des umgebenden Mediums innerhalb des Kühlraums entnommen werden kann. Am Ende eines Auftauprozesses ist der Probenbehälter dagegen vorzugsweise in einer angehobenen Position, damit die aufgetaute Probe ohne störende Temperatureinwirkungen des am Boden des Kühlraums befindlichen, extrem kalten Mediums zu vermeiden.

Zum anderen ermöglicht die vertikale Bewegung des Probenbehälters durch die Hebeeinrichtung in einer Variante der Erfindung eine Temperierung des Probenbehälters, indem der Probenbehälter entsprechend der gewünschten Temperatur innerhalb der vertikalen Temperaturschichtung in dem Kühlraum angehoben oder abgesenkt wird. Bei dieser Variante der Erfindung kann der Probenbehälter also auch ohne eine separate Kühleinrichtung getrennt von dem Kühlraum temperiert werden, indem der Probenbehälter entsprechend angehoben bzw. abgesenkt wird.

Hierbei ist es vorteilhaft, wenn der Probenbehälter einen Temperatursensor aufweist, der die Temperatur in dem Probenbehälter oder auf Höhe des Probenbehälters oder darunter bzw. darüber misst, damit die vertikale Bewegung des Probenbehälters in dem Kühlraum temperaturabhängig geregelt werden kann.

Besonders vorteilhaft ist es hierbei, wenn an dem Probenbehälter mehrere Temperatursensoren in unterschiedlichem vertikalen Abstand zu dem Probenbehälter angebracht sind, was die Ermittlung eines lokalen vertikalen Temperaturgradienten ermöglicht. Die Regelung der Aufwärts- bzw. Abwärtsbewegung des Probenbehälters kann dann sehr feinfühlig auf lokale Temperaturschwankungen in dem Kühlraum reagieren.

Es besteht jedoch alternativ auch die Möglichkeit, dass der Probenbehälter ortsfest in dem Kühlraum angeordnet ist, wobei sich der Probenbehälter vorzugsweise am Boden des Kühlraums befindet. Die Temperaturänderung an der Öffnung des Probenbehälters wird hierbei nicht durch eine Anhebung bzw. Absenkung des Probenbehälters erreicht, sondern kann beispielsweise durch eine Heizung realisiert werden, die den Kühlraum beheizt, wobei die Heizeinrichtung vorzugsweise nur einen oberen Teilbereich des Kühlraums beheizt. Die Heizeinrichtung wird dann vorzugsweise angeschaltet, wenn am Beginn eines Einfrierprozesses eine Probe in den Probenbehälter eingeführt werden soll oder wenn die Probe am Ende eines Auftauprozesses aus dem Probenbehälter entnommen wird. Die Beheizung des oberen Bereichs des Kühlraums verhindert dann vorteilhafterweise eine störende thermische Beeinträchtigung der Probe beim Einführen bzw. bei der Entnahme der Probe. Die Heizeinrichtung wird dagegen vorzugsweise abgeschaltet, wenn die Probe am Ende eines Einfrierprozesses aus dem Probenbehälter entnommen wird oder wenn die Probe zu Beginn eines Auftauprozesses in den Probenbehälter eingeführt wird. Die Abschaltung der Heizung verhindert dann ebenfalls, dass die gefrorene Probe beim Einführen bzw. bei der Entnahme thermisch beschädigt wird.

Vorzugsweise besteht in dem Kühlraum eine vertikale Temperaturschichtung mit einer unteren Kaltschicht und einer oberen Warmschicht. Dies ist vorteilhaft, weil der Probenbehälter dabei für die Entnahme bzw. Einführung der Probe in die Temperaturschicht angehoben bzw. abgesenkt werden kann, die der aktuellen Probentemperatur am nächsten kommt und damit eine thermische Beeinträchtigung der Probe vermeidet.

Bei einer derartigen vertikalen Temperaturschichtung innerhalb des Kühlraums weist die Warmschicht vorzugsweise eine Temperatur auf, die im Wesentlichen einer vorgegebenen Starttemperatur eines Einfrierprozesses oder einer vorgegebenen Zieltemperatur eines Auftauprozesses entspricht, während die Kaltschicht eine Temperatur aufweist, die im Wesentlichen einer vorgegebenen Zieltemperatur des Einfrierprozesses oder einer vorgegebenen Starttemperatur des Auftauprozesses entspricht. Dies ist vorteilhaft, weil die beiden Temperaturschichten in dem Kühlraum dann stets die richtige Temperatur aufweisen, um bei der Entnahme der Probe bzw. beim Einführen in den Probenbehälter eine thermische Beeinträchtigung der Probe zu vermeiden.

In einem bevorzugten Ausführungsbeispiel der Erfindung ist der Probenbehälter thermisch isoliert und weist einen Deckel auf, der zur Entnahme der Probe und zum Einführen der Probe geöffnet werden kann. Die thermische Isolation des Probenbehälters ist wichtig, wenn die Temperierung des Probenbehälters aktiv durch eine Kühlung und/oder Heizung erfolgt, da die Temperatureinstellung in dem Probenbehälter dann von der Umgebungstemperatur innerhalb des Kühlraums nur minimal beeinflusst wird.

Es ist jedoch alternativ auch möglich, dass der Probenbehälter gegenüber dem Kühlraum thermisch nicht isoliert ist. Dies ist insbesondere dann sinnvoll, wenn die Temperierung des Probenbehälters nicht aktiv durch eine Heiz- bzw. Kühleinrichtung erfolgt, sondern durch eine vertikale Bewegung des Probenbehälters innerhalb der vertikalen Temperaturschichtung des Kühlraums, wie vorstehend bereits erläutert wurde.

In einem bevorzugten Ausführungsbeispiel der Erfindung ist in dem Kühlraum mindestens ein im Wesentlichen senkrecht verlaufender Schacht mit einer Wandung aus einem wärmeleitfähigen Material angeordnet, wobei der Probenbehälter in dem Schacht vertikal beweglich ist. Die gute Wärmeleitfähigkeit der Schachtwandung führt hierbei vorteilhaft zu einem annähernd konstanten vertikalen Temperaturgradienten in dem Schacht, so dass jeder Höhe in dem Schacht eine bestimmte Temperatur zugeordnet werden kann. Dies ermöglicht vorteilhaft den Verzicht auf Temperatursensoren an dem Probenbehälter.

Der Kühlraum selbst ist bei der erfindungsgemäßen Kryoeinrichtung vorzugsweise wannenförmig ausgebildet und an seiner Oberseite durch eine abnehmbare Schutzhaube abgedeckt, die vorzugsweise mindestens teilweise durchsichtig ist, um eine Sichtkontrolle zu ermöglichen.

Es besteht jedoch alternativ auch die Möglichkeit eines Verzichts auf eine Schutzhaube, so dass der Kühlraum nach oben hin offen ist.

Ferner ist zu erwähnen, dass in dem Kühlraum mehrere Ablageflächen in unterschiedlichen Höhen angeordnet sein können, die unterschiedlichen Temperaturen entsprechend der vertikalen Temperaturschichtung in dem Kühlraum entsprechen.

Schließlich ist noch zu erwähnen, dass die Erfindung nicht nur die vorstehend beschriebene erfindungsgemäße Kryoeinrichtung umfasst, sondern auch ein entsprechendes Betriebsverfahren, das sich aus der vorstehenden Beschreibung ergibt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematisierte Querschnittsansicht einer erfindungsgemäßen Kryoeinrichtung zum vitalitätserhaltenden Einfrieren und Auftauen einer biologischen Probe,
- Figur 2: eine schematisierte Querschnittsdarstellung eines abgewandelten Ausführungsbeispiels einer Kryoeinrichtung gemäß Figur 1,
- Figur 3: eine schematisierte Querschnittsansicht eines alternativen Ausführungsbeispiels einer erfindungsgemäßen Kryoeinrichtung mit einer zusätzlichen Heizeinrichtung,
- Figur 4: eine schematisierte Querschnittsansicht eines vereinfachten Ausführungsbeispiels einer derartigen Kryoeinrichtung, die im Gegensatz zu den anderen Kryoeinrichtungen keine Schutzhaube aufweist,
- Figur 5A: eine vereinfachte Querschnittsansicht eines weiteren Ausführungsbeispiels einer erfindungsgemäßen Kryoeinrichtung,
- Figur 5B: eine Querschnittsansicht einer Hebeeinrichtung der Kryoeinrichtung aus Fig. 5A zur Anhebung bzw. Absenkung der Probe,
- Figur 6: eine vereinfachte Querschnittsansicht eines weiteren Ausführungsbeispiels einer erfindungsgemäßen Kryoeinrichtung mit mehreren Hebeeinrichtungen zum gleichzeitigen Einfrieren bzw. Auftauen mehrerer Proben unabhängig voneinander,
- Figur 7A: einen Einfrierprozess bei dem Ausführungsbeispiel gemäß Figur 1 in Form eines Flussdiagramms,
- Figur 7B: einen Auftauprozess bei dem Ausführungsbeispiel gemäß Figur 1 in Form eines Flussdiagramms,
- Figur 8A: einen Einfrierprozess bei dem Ausführungsbeispiel gemäß den Figuren 2 und 5A, 5B in Form eines Flussdiagramms sowie
- Figur 8B: einen Auftauprozess bei den Ausführungsbeispielen gemäß Figur 2 bzw. 5A, 5B.

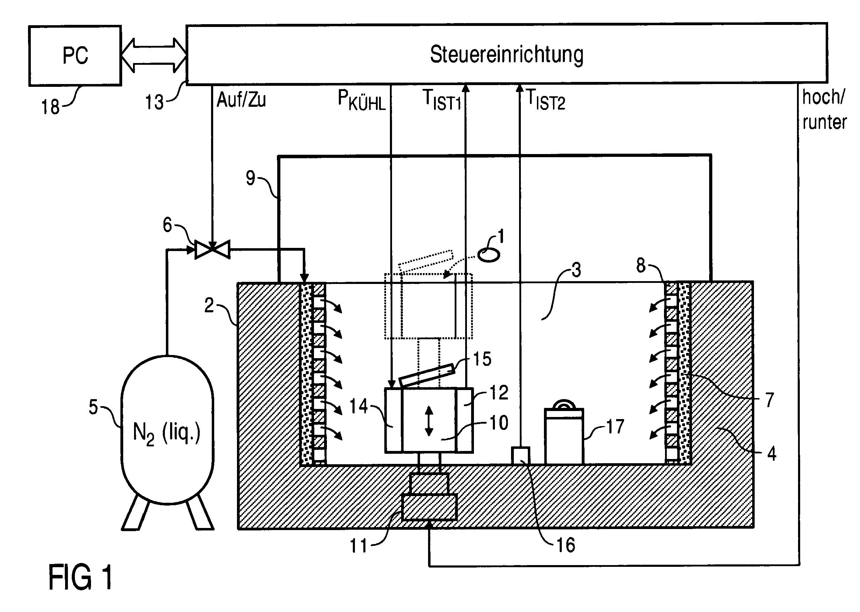

Die in Figur 1 gezeigte Kryoeinrichtung ermöglicht ein vitalitätserhaltendes Einfrieren und Auftauen einer biologischen Probe 1, indem die Probe 1 beim Einfrieren und Auftauen jeweils entsprechend einem vorgegebenen zeitlichen Temperaturverlauf abgekühlt bzw. erwärmt wird.

Hierzu weist die Kryoeinrichtung eine Kryowanne 2 auf, die einen Kühlraum 3 einschließt, wobei die Kryowanne 2 eine Wandung 4 aus einem thermisch isolierenden Material aufweist.

Die Kühlung des Kühlraums 3 erfolgt durch flüssigen Stickstoff, der in einem hier nur schematisch dargestellten Kühlmittelbehälter 5 enthalten ist und über ein steuerbares Kühlmittelventil 6 in den Kühlraum 3 eingeleitet wird.

Die Einleitung des flüssigen Stickstoffs in den Kühlraum 3 erfolgt hierbei indirekt über ein poröses Puffermaterial 7, mit dem die Innenseite der Wandung 4 der Kryowanne 2 verkleidet ist, wobei an der Innenseite des Puffermaterials 7 ein Gitter 8 aus einem gut wärmeleitfähigen Material (z.B. Kupfer) angeordnet ist. Das Puffermaterial 7 verhindert, dass sich der zugeführte flüssige Stickstoff am Boden des Kühlraums 3 in Form eine sogenannten Stickstoffsees sammelt. Stattdessen wird der zugeführte flüssige Stickstoff von dem Puffermaterial 7 gleichmäßig durch das Gitter 8 hindurch in den Kühlraum 3 abgegeben.

An ihrer Oberseite ist die Kryowanne 2 durch eine abnehmbare Schutzglocke 9 abgedeckt, wobei die Schutzglocke 9 durchsichtig ist, um eine Sichtkontrolle des Kühlraums 3 zu ermöglichen.

In dem Kühlraum 3 befindet sich ein Probenbehälter 10, der von einer hier nur schematisch dargestellten Hebeeinrichtung 11 in dem Kühlraum 3 in vertikaler Richtung angehoben bzw, abgesenkt werden kann, wie noch detailliert beschrieben wird.

An dem Probenbehälter 10 befindet sich ein Temperatursensor 12, der die Temperatur T_{IST1} in dem Probenbehälter 10 misst und an eine Steuereinrichtung 13 weiterleitet, wobei die Steuereinrichtung 13 auch das Kühlmittelventil 6 ansteuert und damit die Temperatur in dem Kühlraum 3 einstellt.

Weiterhin weist der Probenbehälter 10 eine Kühleinrichtung 14 auf, die nur schematisch dargestellt ist und den Innenraum des Probenbehälters 10 mit einer durch die Steuereinrichtung 13 vorgegebenen Kühlleistung P_{KÜHL} kühlt, wie ebenfalls noch detailliert beschrieben wird. Die Kühleinrichtung 14 kann beispielsweise den in dem Kühlmittelbehälter 5 enthaltenen flüssigen Stickstoff zu Kühlzwecken nutzen, jedoch sind auch andere Kühltechniken anwendbar.

Weiterhin ist zu erwähnen, dass der Probenbehälter 10 thermisch isoliert ist und einen ebenfalls thermisch isolierten, verschließbaren Deckel 15 aufweist, wobei der Deckel 15 geöffnet wird, um die Probe 1 in den Probenbehälter 10 einführen bzw. aus dem Probenbehälter 10 entnehmen zu können.

Ferner ist am Boden des Kühlraums 3 ein weiterer Temperatursensor 16 angeordnet, der die Temperatur T_{IST2} am Boden des Kühlraums 3 misst und an die Steuereinrichtung 13 weiterleitet. Die Steuereinrichtung regelt dann die Temperatur T_{IST2} auf einen vorgegebenen Sollwert ein, indem das Kühlmittelventil 6 entsprechend angesteuert wird.

Darüber hinaus befindet sich am Boden des Kühlraums 3 ein entnehmbarer Transportbehälter 17, der thermisch isoliert ist und einen abnehmbaren Deckel aufweist. Der Transportbehälter 17 ermöglicht eine Überführung der tiefgefrorenen Probe 1 aus dem Kühlraum 3 in einem hier nicht dargestellten Kryotank, ohne dass die Probe 1 während dieser Überführung erwärmt und dadurch thermisch beschädigt wird. Darüber hinaus ermöglicht der Transportbehälter 17 die Überführung der tiefgefrorenen Probe 1 aus einem hier nicht dargestellten Kryotank in den Kühlraum 3, damit die gefrorene Probe 1 anschließend in dem Probenbehälter 10 aufgetaut werden kann, was noch detailliert beschrieben wird.

Die Steuereinrichtung 13 ist schließlich mit einem herkömmlichen Personal-Computer 18 verbunden, wobei an dem Personal-Computer 18 beliebige zeitliche Temperaturverläufe für den Einfrier- bzw. Auftauprozess programmiert werden können.

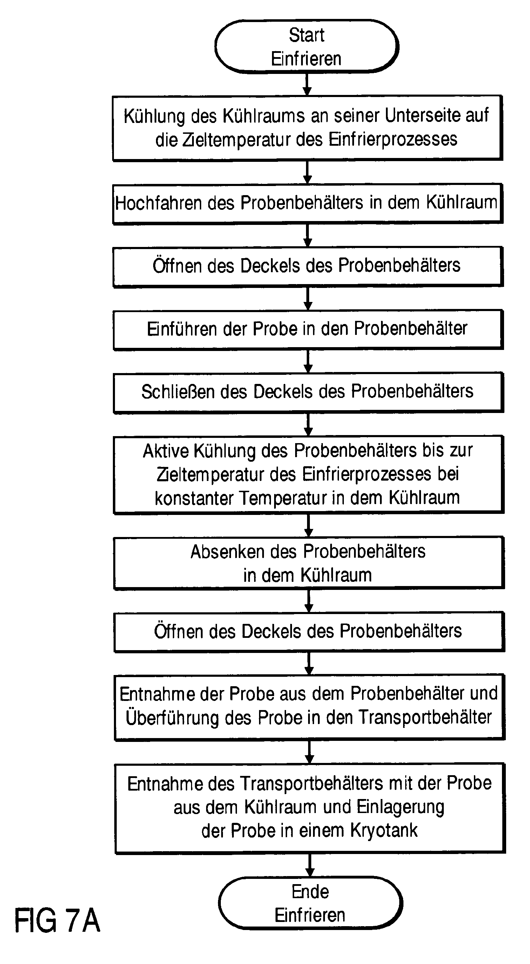

Im Folgenden wird nun unter Bezugnahme auf das Flussdiagramm in Figur 7A ein Einfrierprozess der Kryoeinrichtung gemäß Figur 1 beschrieben.

Dabei regelt die Steuereinrichtung 13 die Temperatur T_{IST2} am Boden des Kühlraums 3 durch eine geeignete Ansteuerung des Kühlmittelventils 6 auf die vorgegebene Zieltemperatur des Einfrierprozesses herunter.

Weiterhin wird der leere Probenbehälter 10 von der Hebeeinrichtung 11 in dem Kühlraum 3 nach oben in die punktiert dargestellte Position gefahren, so dass die Mündungsöffnung des Probenbehälters 10 bei einer Öffnung des Deckels 5 oberhalb der Kryowanne 2 liegt.

Der Deckel 15 des Probenbehälters 10 wird dann geöffnet, woraufhin die Probe 1 in den Probenbehälter 10 eingeführt und der Deckel 15 des Probenbehälters geschlossen wird. Bei diesem Einführen der Probe 1 in den Probenbehälter 10 wird die Probe 1 thermisch kaum beeinträchtigt, da die Temperaturen in diesem Gebiet nahe der Starttemperatur des Einfrierprozesses liegen.

Nach dem Verschließen des Probenbehälters 10 wird dessen Innenraum dann von der Kühleinrichtung 14 gekühlt, wobei die Steuereinrichtung 13 einen vorgegebenen zeitlichen Temperaturverlauf regelt, indem die Kühleinrichtung 14 entsprechend der von dem Temperatursensor 12 gemessenen Temperatur T_{IST} die Kühleinrichtung 14 ansteuert.

Nach dem Abschluss des Einfrierprozesses wird der Probenbehälter 10 dann in den Kühlraum 3 von der Hebeeinrichtung 11 heruntergefahren, wobei im unteren Bereich des Kühlraums 3 eine Temperatur herrscht, die im Wesentlichen der Zieltemperatur des Einfrierprozesses entspricht. Beim anschließenden Öffnen des Deckels 15 und der Entnahme der Probe 1 aus dem Probenbehälter 10 wird die gefrorene Probe 1 dann thermisch kaum beeinträchtigt, da das umgebende Medium in dem Kühlraum 3 nahezu die gleiche Temperatur hat.

Die Probe 1 wird dann nach der Entnahme aus dem Probenbehälter 10 in den Transportbehälter 17 überführt, woraufhin der Transportbehälter 17 mit der darin befindlichen tiefgefrorenen Probe 1 aus dem Kühlraum 3 entnommen und beispielsweise in einem Kryotank eingelagert werden kann.

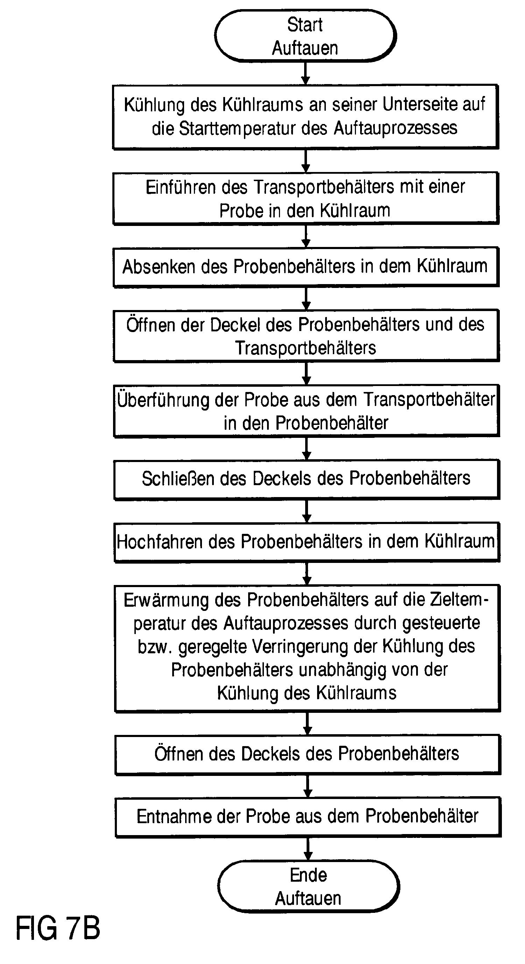

Im Folgenden wird nun unter Bezugnahme auf das Flussdiagramm in Figur 7B ein Auftauprozess der Kryoeinrichtung gemäß Figur 1 beschrieben.

Hierbei wird der Kühlraum 3 so weit gekühlt, dass die Temperatur T_{IST2} am Boden des Kühlraums 3 im Wesentlichen der Starttemperatur des Auftauprozesses entspricht.

Anschließend wird dann der Transportbehälter 17 mit der darin befindlichen tiefgefrorenen Probe 1 aus einem hier nicht dargestellten Kryotank entnommen und auf den Boden des Kühlraums 3 gestellt.

Daraufhin wird dann der Deckel 15 des Probenbehälter 10 geöffnet, wie auch der Deckel des Transportbehälters 17 geöffnet wird.

Die in dem Transportbehälter 17 befindliche Probe 1 wird dann aus dem Transportbehälter 17 entnommen und in den Probenbehälter 10 überführt, woraufhin dann der Deckel 15 des Probenbehälters 10 geschlossen wird. Bei der Überführung der Probe 1 aus dem Transportbehälter 17 in den Probenbehälter 10 wird die Probe 1 thermisch kaum beeinträchtigt, da die Temperaturen am Boden des Kühlraums 3 im Wesentlichen gleich der Temperatur der Probe 1 sind.

Nach dem Verschließen des Probenbehälters 10 wird der Probenbehälter 10 dann von der Hebeeinrichtung 11 in dem Kühlraum 3 vertikal nach oben in die punktiert dargestellte Position gefahren.

Anschließend wird der Innenraum des Probenbehälters 10 dann entsprechend einem vorgegebenen zeitlichen Temperaturverlauf erwärmt, indem die Kühlleistung P_{KÜHL} der Kühleinrichtung 14 verringert wird, wobei die Steuereinrichtung 13 die Kühlleistung P_{KÜHL} in Abhängigkeit von der gemessenen Temperatur T_{IST1} regelt, um den gewünschten zeitlichen Temperaturverlauf in dem Probenbehälter 10 beim Auftauen der Probe 1 zu erreichen.

Nach dem Ende des Auftauprozesses wird der Deckel 15 des Probenbehälters 10 dann geöffnet, woraufhin die aufgetaute Probe 1 dann aus dem Probenbehälter 10 entnommen wird.

Auch bei dieser Entnahme der aufgetauten Probe 1 aus dem Probenbehälter 10 wird die Probe 1 von dem umgebenden Medium thermisch kaum beeinträchtigt, da die Temperaturen in diesem Gebiet relativ hoch sind.

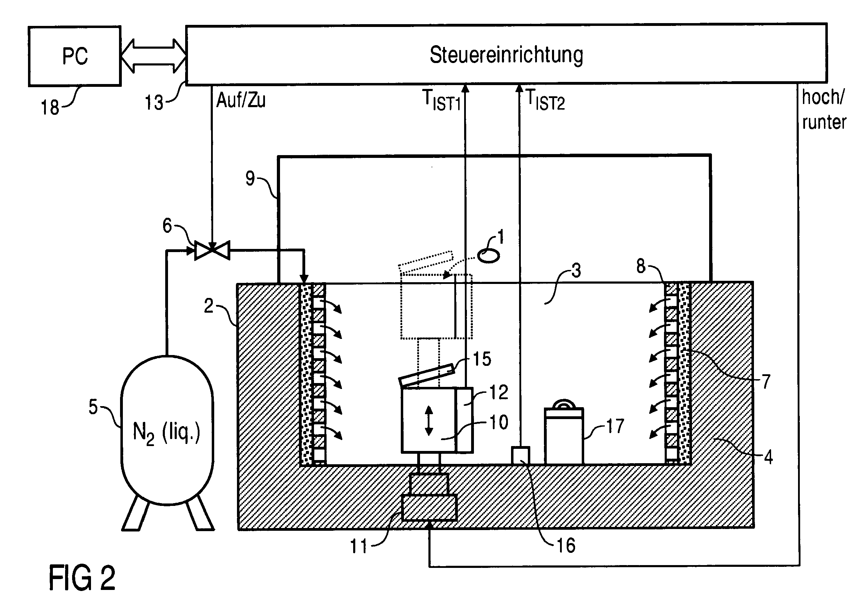

Im Folgenden wird nun das in Figur 2 dargestellte alternative Ausführungsbeispiel einer ähnlichen Kryoeinrichtung beschrieben, das weitgehend mit dem vorstehend beschriebenen und in Figur 1 dargestellten Ausführungsbeispiel einer Kryoeinrichtung übereinstimmt. Zur Vermeidung von Wiederholungen wird deshalb weitgehend auf die vorstehende Beschreibung verwiesen, wobei für entsprechende Bauteile dieselben Bezugszeichen verwendet werden.

Eine Besonderheit dieses Ausführungsbeispiels besteht darin, dass die Kryoeinrichtung keine separate, aktiv arbeitende Kühleinrichtung 14 aufweist.

Stattdessen erfolgt die Temperierung des Probenbehälters 10 hierbei durch eine vertikale Absenkung bzw. Anhebung des Probenbehälters 10 in dem Kühlraum 3. Aufgrund der vertikalen Temperaturschichtung in dem Kühlraum 3 ändert sich dann auch die Temperatur in dem Probenbehälter 10, so dass beim Auftauen bzw. Einfrieren der Probe ebenfalls vorgegebene zeitliche Temperaturverläufe eingestellt werden können. Das Absenken bzw. Anheben des Probenbehälters 10 erfolgt hierbei geregelt von der Steuereinrichtung 13 in Abhängigkeit von der von dem Temperatursensor 12 gemessenen Temperatur T_{IST1} in dem Probenbehälter 10.

Im Gegensatz zu dem Ausführungsbeispiel gemäß Figur 1 ist der Probenbehälter 10 hierbei thermisch nicht isoliert, damit der Innenraum des Probenbehälters 10 in Abhängigkeit von seiner jeweiligen Höhe innerhalb des Kühlraums 3 die zugehörige Temperatur annehmen kann.

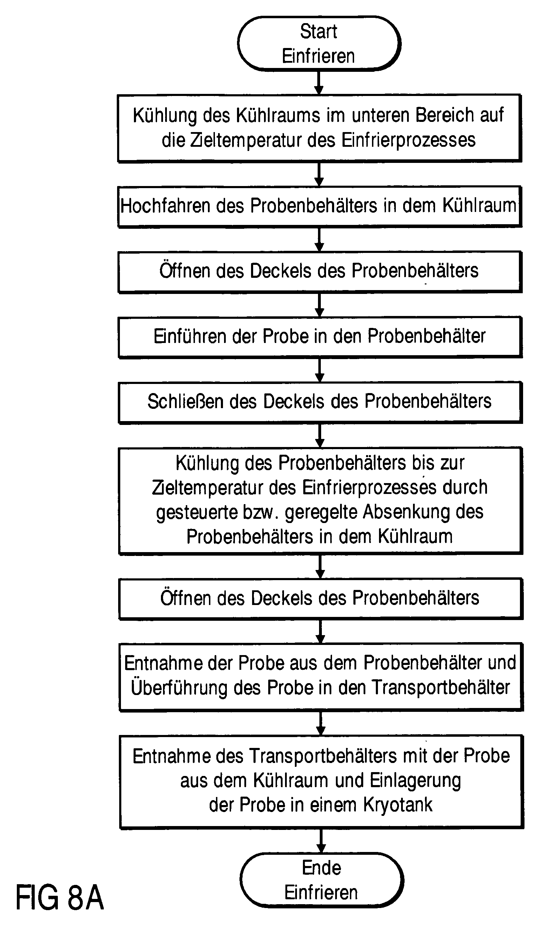

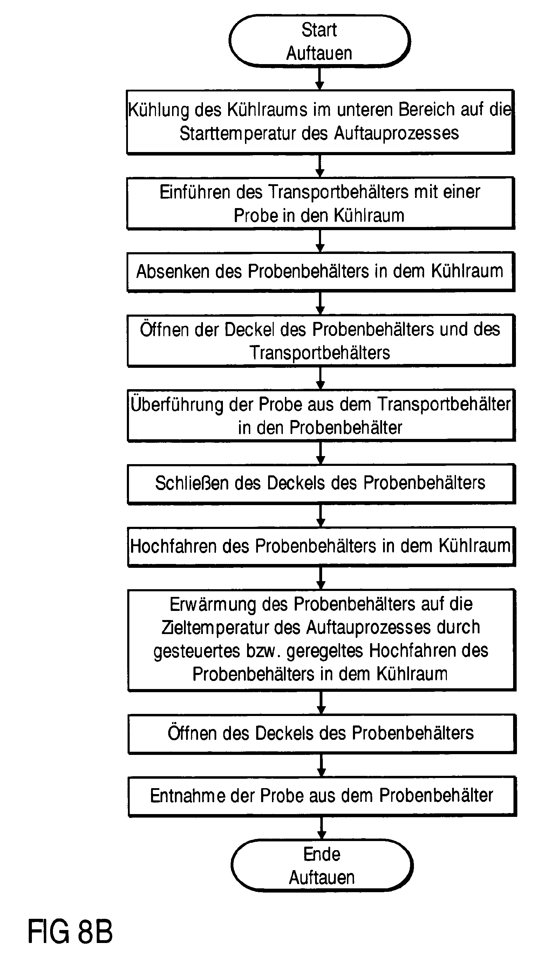

Der Ablauf des Einfrierprozesses ergibt sich hierbei aus dem Flussdiagramm gemäß Figur 8A, während der Ablauf eines Auftauprozesses in dem Flussdiagramm gemäß Figur 8B dargestellt ist.

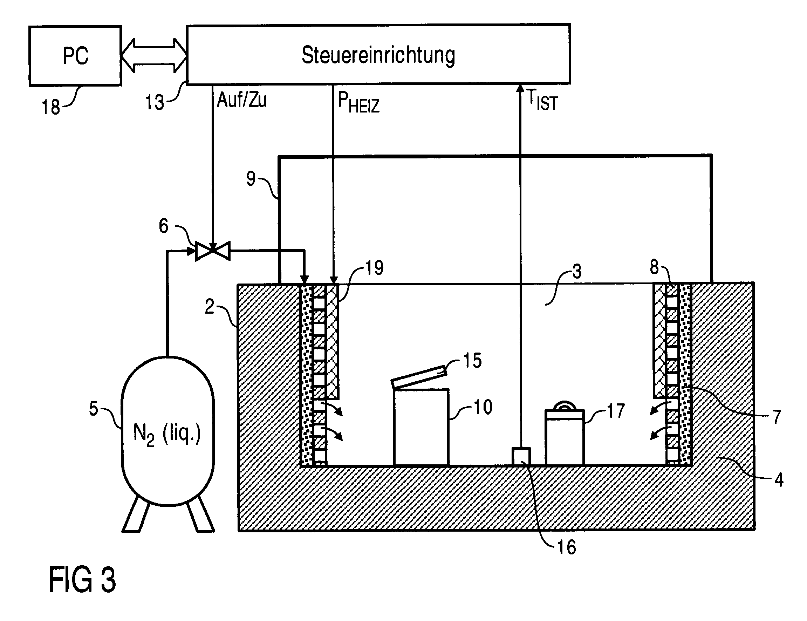

Nachfolgend wird nun das in Figur 3 dargestellte alternative Ausführungsbeispiel einer erfindungsgemäßen Kryoeinrichtung beschrieben, das teilweise mit den vorstehend beschriebenen Ausführungsbeispielen übereinstimmt, so dass zur Vermeidung von Wiederholungen auf die vorstehende Beschreibung verwiesen wird, wobei für entsprechende Bauteile dieselben Bezugszeichen verwendet werden.

Eine Besonderheit dieses Ausführungsbeispiels besteht zunächst darin, dass der Probenbehälter 10 in dem Kühlraum 3 ortsfest am Boden des Kühlraums 3 angeordnet ist, so dass auf die Hebeeinrichtung 11 verzichtet werden kann.

Eine weitere Besonderheit dieses Ausführungsbeispiels besteht darin, dass an der Innenwand des Kühlraums 3 im oberen Bereich eine Heizeinrichtung 19 angebracht ist, die den oberen Teilbereich des Kühlraums 3 beheizt.

Die Heizeinrichtung 19 wird von der Steuereinrichtung 13 angeschaltet, bevor eine Probe zu Beginn eines Einfrierprozesses in den Probenbehälter 10 eingeführt wird. Dadurch wird der obere Teilbereich des Kühlraums 3 beheizt, wodurch eine thermische Beschädigung der Probe beim Einführen in den Probenbehälter 10 verhindert wird.

Darüber hinaus wird die Heizeinrichtung 19 von der Steuereinrichtung 13 auch angeschaltet, bevor eine aufgetaute Probe am Ende eines Auftauprozesses aus dem Probenbehälter entnommen wird. Auch dadurch wird verhindert, dass die aufgetaute Probe bei der Entnahme aus dem Probenbehälter 10 thermisch beschädigt wird.

Die Heizeinrichtung 19 wird dagegen abgeschaltet, wenn die Probe am Ende eines Einfrierprozesses aus dem Probenbehälter 10 entnommen und in den Transportbehälter 17 überführt wird.

Darüber hinaus wird die Heizeinrichtung 19 auch abgeschaltet, wenn die Probe zu Beginn eines Auftauprozesses aus dem Transportbehälter 17 in den Probenbehälter 10 überführt wird.

Diese Abschaltung der Heizeinrichtung 19 verhindert wiederum eine thermische Beeinträchtigung der tiefgekühlten Probe bei der Überführung zwischen dem Probenbehälter 10 und dem Transportbehälter 17.

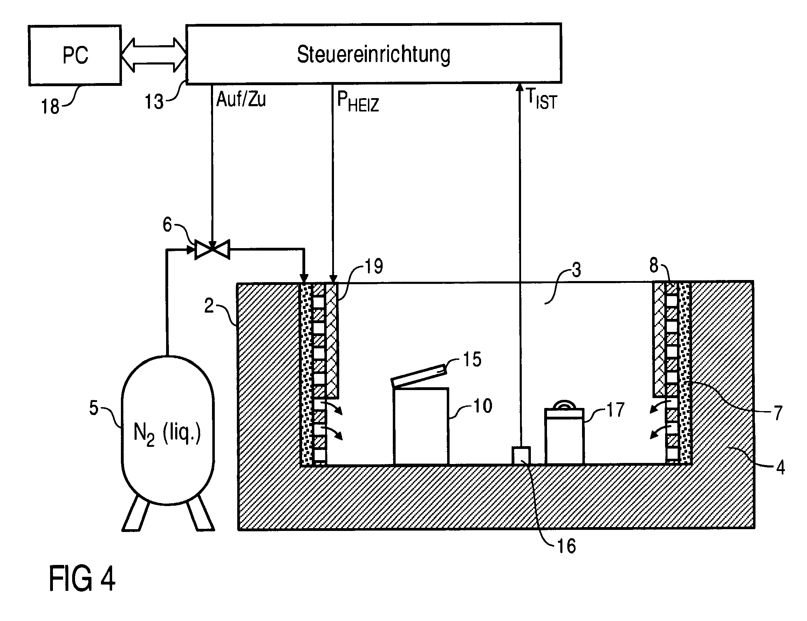

Das in Figur 4 dargestellte alternative Ausführungsbeispiel stimmt nahezu vollständig mit dem vorstehend beschriebenen und in Figur 3 dargestellten Ausführungsbeispiel überein, wobei lediglich die Schutzglocke 9 weggelassen wurde.

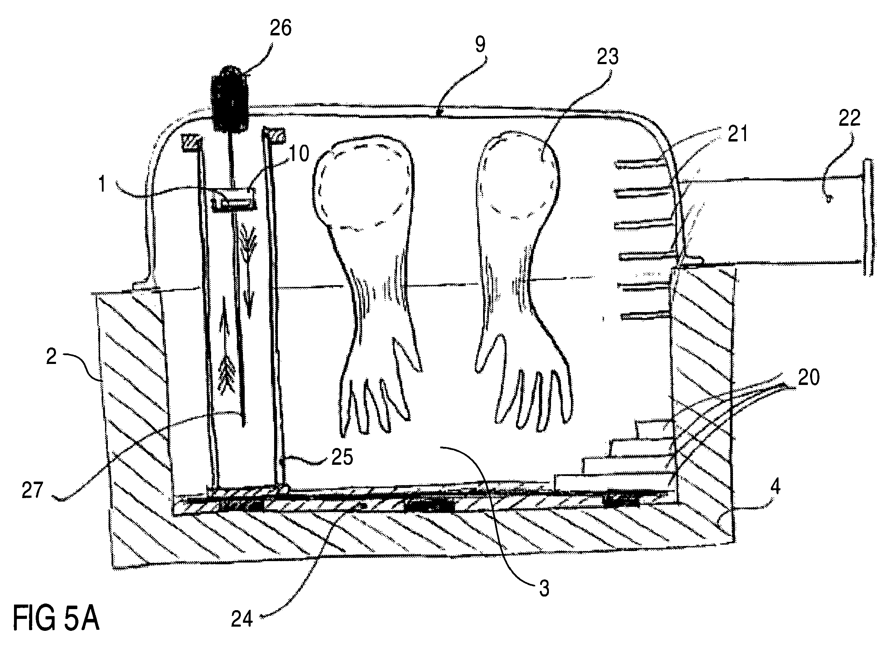

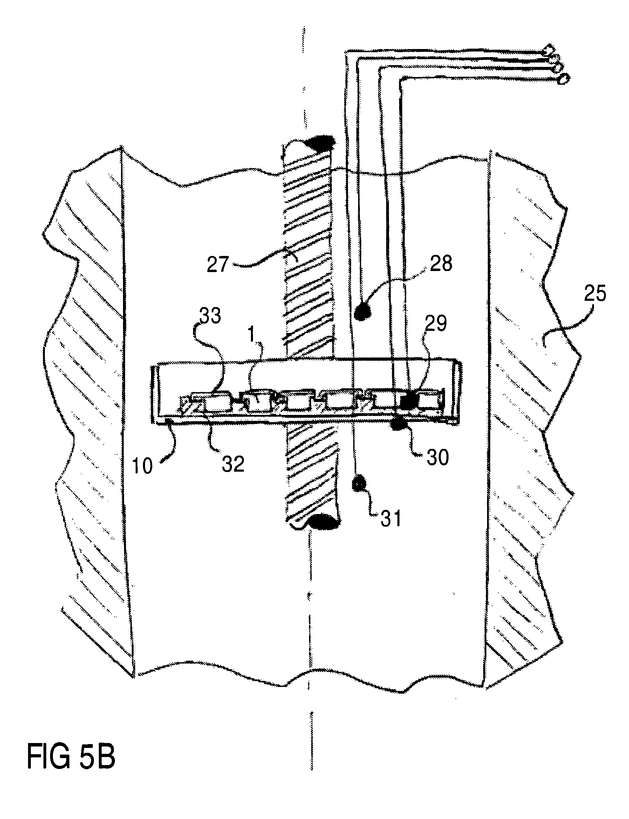

Im Folgenden wird nun das in den Figuren 5A und 5B dargestellte alternative Ausführungsbeispiel einer erfindungsgemäßen Kryoeinrichtung beschrieben, das teilweise mit den vorstehend beschriebenen Ausführungsbeispielen übereinstimmt, so dass zur Vermeidung von Wiederholungen teilweise auf die vorstehende Beschreibung verwiesen wird, wobei entsprechende Bauteile mit denselben Bezugszeichen gekennzeichnet sind.

Eine Besonderheit dieses Ausführungsbeispiels besteht darin, dass am Boden des Kühlraums 3 mehrere stufenförmige Ablageflächen 20 angeordnet sind, auf denen jeweils Kryosubstrate vorübergehend abgelegt werden können. Aufgrund der vertikalen Temperaturschichtung in dem Kühlraum 3 liegen die einzelnen Ablageflächen 20 jeweils auf unterschiedlichen Temperaturen, so dass ein stufenförmiges Temperaturprofil zeitlich aufeinanderfolgend durchfahren werden kann, indem eine Kryoprobe nacheinander auf den verschiedenen Ablageflächen 20 abgelegt wird.

Eine weitere Besonderheit dieses Ausführungsbeispiels besteht darin, dass im oberen Bereich des Kühlraums 3 übereinander mehrere regalartige Ablageflächen 21 angeordnet sind, die ebenfalls aufgrund der vertikalen Temperaturschichtung innerhalb des Kühlraums 3 unterschiedliche Temperaturen aufweisen und die Ablage einer Probe ermöglichen.

Darüber hinaus weist die Kryoeinrichtung in diesem Ausführungsbeispiel eine Schleuse 22 auf, über die Proben in den Kühlraum 3 eingebracht und aus dem Kühlraum 3 entnommen werden können.

Weiterhin ist die Schutzglocke 9 mit Eingriffen 23 versehen, über die eine Bedienungsperson Manipulationen in dem Kühlraum 3 vornehmen kann.

Die Kühlung des Kühlraums 3 erfolgt hierbei durch einen Stickstoffsee 24, der am Boden des Kühlraums 3 erzeugt wird.

Die Temperierung der Probe 1 in Form eines Kryosubstrats innerhalb des Probenbehälters 10 erfolgt hierbei jedoch in anderer Weise, wie nachfolgend beschrieben wird.

Hierzu ist in dem Kühlraum 3 ein vertikal verlaufender Schacht 25 angeordnet, der aus einem gut wärmeleitfähigen Material (z.B. Kupfer) besteht und innerhalb des Schachts 25 aufgrund der guten Wärmeleitfähigkeit einen annähernd konstanten vertikalen Temperaturgradienten erzeugt.

Der Probenbehälter 10 kann von einem Motor 26 über eine drehbare Spindel 27 in dem Schacht 25 in vertikaler Richtung angehoben oder abgesenkt werden, um den Probenbehälter 10 entsprechend der vertikalen Temperaturschichtung in dem Kühlraum 3 zu temperieren.

Aus Figur 5B ist weiterhin ersichtlich, dass oberhalb und unterhalb des Probenbehälters 10 in unterschiedlichen Höhen mehrere Temperatursensoren 28-31 angeordnet sind, die einen lokalen vertikalen Temperaturgradienten messen, wobei die Temperatursensoren 28-31 mit einer Regeleinrichtung verbunden sind, die den Motor 26 so ansteuert, dass sich der Probenbehälter 10 stets in der richtigen Höhe innerhalb des Kühlraums 3 befindet, damit während des Einfrierens bzw. Auftauens der Probe 1 der gewünschte zeitliche Temperaturverlauf erreicht wird.

Weiterhin zeigt die vergrößerte Querschnittsansicht in Figur 5B, dass der schlittenförmige Probenbehälter 10 ein Kryosubstrat 32 und einen Deckel 33 und Behältnisse für die Proben 1 enthält.

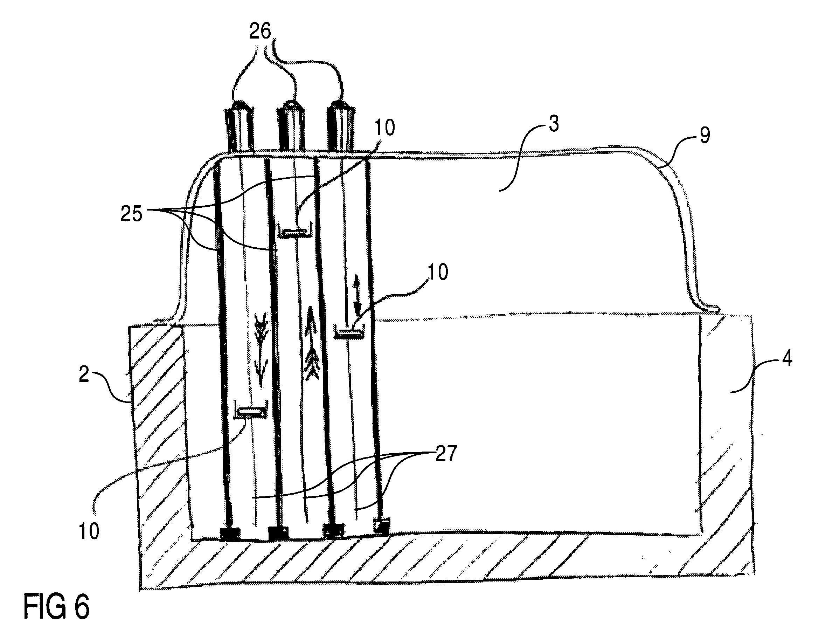

Im Folgenden wird nun das in Figur 6 dargestellte alternative Ausführungsbeispiel beschrieben, das weitgehend mit dem vorstehend beschriebenen und in den Figuren 5A und 5B dargestellten Ausführungsbeispiel übereinstimmt, so dass zur Vermeidung von Wiederholungen weitgehend auf die vorstehende Beschreibung dieser Figuren verwiesen wird, wobei für entsprechende Bauteile dieselben Bezugszeichen verwendet werden.

Eine Besonderheit dieses Ausführungsbeispiels besteht darin, dass in dem Kühlraum 3 nebeneinander mehrere Schächte 25 angeordnet sind, in denen jeweils ein Probenbehälter 10 in vertikaler Richtung angehoben bzw. abgesenkt werden kann, um entsprechend der vertikalen Temperaturschichtung in dem Kühlraum 3 die gewünschte Temperatur einzustellen. Diese Anordnung ermöglicht vorteilhaft parallele Einfrier- bzw. Auftauprozesse an mehreren Proben.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken gemäß den Ansprüchen 1 und 17 Gebrauch machen und deshalb in den Schutzbereich fallen.

### Bezugszeichenliste:

- 1: Probe
- 2: Kryowanne
- 3: Kühlraum
- 4: Wandung
- 5: Kühlmittelbehälter
- 6: Kühlmittelventil
- 7: Puffermaterial
- 8: Gitter
- 9: Schutzglocke
- 10: Probenbehälter
- 11: Hebeeinrichtung
- 12: Temperatursensor
- 13: Kühleinrichtung
- 14: Kühleinrichtung
- 15: Deckel
- 16: Temperatursensor
- 17: Transportbehälter
- 18: Personal Computer
- 19: Heizeinrichtung
- 20: Ablageflächen
- 21: Ablageflächen
- 22: Schleuse
- 23: Eingriffe
- 24: Stickstoffsee
- 25: Schacht
- 26: Motor
- 27: Spindel
- 28-31: Temperatursensor
- 32: Kryosubstrat
- 33: Deckel

## Patentansprüche

1. Kryoeinrichtung zum Einfrieren und/oder Auftauen einer Probe (1), insbesondere bei der Kryokonservierung einer biologischen Probe (1), mit
a) einem kühlbaren Kühlraum (3) und
b) einem in dem Kühlraum (3) angeordneten Probenbehälter (10) zur vorübergehenden Aufnahme der Probe (1) beim Einfrieren oder Auftauen der Probe (1), wobei der Probenbehälter (10) getrennt von dem Kühlraum (3) temperierbar ist,
**gekennzeichnet durch**
c) einen thermisch isolierten, entnehmbaren Transportbehälter (17), der in dem Kühlraum (3) angeordnet ist, um die Probe (1) nach dem Einfrieren aus dem Kühlraum (3) zu entnehmen oder zum Auftauen in den Kühlraum (3) einzuführen.

2. Kryoeinrichtung nach Anspruch 1, **gekennzeichnet durch** eine Hebeeinrichtung (11), **durch** die der Probenbehälter (10) in dem Kühlraum (3) gesteuert oder geregelt abgesenkt und/oder angehoben werden kann.

3. Kryoeinrichtung nach einem der vorhergehenden Ansprüche, **dadurch gekennzeichnet, dass** der Probenbehälter (10) einen Temperatursensor (12, 28-31) aufweist, der die Temperatur in dem Probenbehälter (10) misst.

4. Kryoeinrichtung nach Anspruch 3, **dadurch gekennzeichnet, dass** an dem Probenbehälter (10) mehrere Temperatursensoren (28-31) in unterschiedlichem vertikalen Abstand zu dem Probenbehälter (10) angebracht sind, um einen lokalen vertikalen Temperaturgradienten in dem Kühlraum (3) zu ermitteln.

5. Kryoeinrichtung nach Anspruch 1, **dadurch gekennzeichnet, dass** der Probenbehälter (10) ortsfest am Boden des Kühlraums (3) angeordnet ist.

6. Kryoeinrichtung nach einem der vorhergehenden Ansprüche, **gekennzeichnet durch** eine Heizeinrichtung (19) zur Beheizung des Kühlraums (3).

7. Kryoeinrichtung nach Anspruch 6, **dadurch gekennzeichnet, dass** die Heizeinrichtung (19) nur einen oberen Teilbereich des Kühlraums (3) beheizt, so dass eine vertikale Temperaturschichtung in dem Kühlraum (3) mit einer unteren Kaltschicht und einer oberen Warmschicht entsteht, wobei die Warmschicht eine Temperatur aufweist, die im Wesentlichen einer vorgegebenen Starttemperatur eines Einfrierprozesses oder einer vorgegebenen Zieltemperatur eines Auftauprozesses entspricht, während die Kaltschicht eine Temperatur aufweist, die im Wesentlichen einer vorgegebenen Zieltemperatur des Einfrierprozesses oder einer vorgegebenen Starttemperatur des Auftauprozesses entspricht.

8. Kryoeinrichtung nach einem der vorhergehenden Ansprüche, **dadurch gekennzeichnet, dass** der Kühlraum (3) durch eine erste Kühleinrichtung (5, 6) kühlbar ist, während der Probenbehälter (10) durch eine zweite Kühleinrichtung (14) kühlbar ist.

9. Kryoeinrichtung nach einem der vorhergehenden Ansprüche, **gekennzeichnet durch** eine Steuereinrichtung (12, 13), wobei die Steuereinrichtung (12, 13) ausgangsseitig mit der ersten Kühleinrichtung (5, 6) und/oder mit der zweiten Kühleinrichtung (14) verbunden ist und deren Kühlleistung einstellt, während die Steuereinrichtung (12, 13) eingangsseitig mit dem Temperatursensor (12, 28-31) des Probenbehälters (10) verbunden ist.

10. Kryoeinrichtung nach einem der vorhergehenden Ansprüche, **dadurch gekennzeichnet, dass** der Probenbehälter (10) thermisch isoliert ist und einen Deckel (15) aufweist, der zur Entnahme der Probe (1) und zum Einführen der Probe (1) geöffnet werden kann und zur thermischen Isolation des Probenbehälters (10) beim Abkühlen geschlossen werden kann.

11. Kryoeinrichtung nach einem der Ansprüche 1 bis 9 **dadurch gekennzeichnet, dass** der Probenbehälter (10) thermisch gegenüber dem Kühlraum (3) unisoliert ist.

12. Kryoeinrichtung nach einem der vorhergehenden Ansprüche, **dadurch gekennzeichnet, dass** in dem Kühlraum (3) ein im Wesentlichen senkrecht verlaufender Schacht (25) mit einer Wandung aus einem wärmeleitfähigen Material angeordnet ist, wobei der Probenbehälter (10) in dem Schacht (25) vertikal beweglich ist.

13. Kryoeinrichtung nach einem der vorhergehenden Ansprüche, **dadurch gekennzeichnet, dass** der Transportbehälter (17) am Boden des Kühlraums (3) angeordnet ist.

14. Kryoeinrichtung nach einem der vorhergehenden Ansprüche, **dadurch gekennzeichnet, dass** der Kühlraum (3) wannenförmig ist und an seiner Oberseite durch eine abnehmbare Schutzhaube (9) abgedeckt ist.

15. Kryoeinrichtung nach Anspruch 14, **dadurch gekennzeichnet, dass** die Schutzhaube (9) mindestens teilweise durchsichtig ist.

16. Kryoeinrichtung nach einem der vorhergehenden Ansprüche, **dadurch gekennzeichnet, dass** in dem Kühlraum (3) mehrere Ablageflächen (20, 21) in unterschiedlichen Höhen angeordnet sind, die unterschiedlichen Temperatur entsprechen.

17. Betriebsverfahren für eine Kryoeinrichtung, insbesondere zur Kryokonservierung einer biologischen Probe (1), mit den folgenden Schritten:
- Einführen der Probe (1) in einen Probenbehälter (10), der in einem kühlbaren Kühlraum (3) angeordnet wird,
- Temperierung der in dem Probenbehälter (10) befindlichen Probe (1),
- Entnahme der Probe (1) aus dem Probenbehälter (10), wobei der Probenbehälter (10) zwischen dem Einführen der Probe (1) und der Entnahme der Probe (1) getrennt von dem Kühlraum (3) temperiert wird,
**dadurch gekennzeichnet, dass**
zum Einfrieren der Probe (1)
- der Kühlraum (3) im unteren Bereich auf eine vorgegebene Zieltemperatur eines Einfrierprozesses abgekühlt wird,
- der Probenbehälter (10) von einer vorgegebenen Starttemperatur des Einfrierprozesses auf die Zieltemperatur des Einfrierprozesses abgekühlt wird,
- die Probe (1) nach dem Erreichen der Zieltemperatur des Einfrierprozesses in einen in dem Kühlraum (3) befindlichen thermisch isolierten Transportbehälter (17) überführt wird und
- der Transportbehälter (17) mit der darin befindlichen Probe (1) aus dem Kühlraum (3) entnommen wird,
und/oder
zum Auftauen der Probe (1)
- der Kühlraum (3) im unteren Bereich auf eine vorgegebene Zieltemperatur eines Einfrierprozesses abgekühlt wird,
- ein thermisch isolierter Transportbehälter (17) mit der darin befindlichen Probe (1) in den Kühlraum (3) eingeführt wird,
- die Probe (1) aus dem Transportbehälter (17) in den Probenbehälter (10) überführt wird,
- der Probenbehälter (10) von einer vorgegebenen Starttemperatur eines Auftauprozesses auf eine vorgegebenen Zieltemperatur des Auftauprozesses erwärmt wird,
- die Probe (1) nach dem Erreichen der Zieltemperatur des Auftauprozesses aus dem Probenbehälter (10) entnommen wird.

18. Betriebsverfahren nach Anspruch 17, **dadurch gekennzeichnet, dass** der Probenbehälter (10) in dem Kühlraum (3) angehoben und/oder abgesenkt wird.

19. Betriebsverfahren nach Anspruch 17, **dadurch gekennzeichnet, dass** der Probenbehälter (10) temperiert wird, indem der Probenbehälter (10) in dem Kühlraum (3) gesteuert oder geregelt angehoben oder abgesenkt wird.

20. Betriebsverfahren nach einem der Ansprüche 17 oder 18, **dadurch gekennzeichnet, dass** der Probenbehälter (10) durch eine Kühleinrichtung (14) aktiv gekühlt wird.

21. Betriebsverfahren nach einem der Ansprüche 17 bis 20, **dadurch gekennzeichnet, dass** in dem Kühlraum (3) eine vertikale Temperaturschichtung mit einer oberen Warmschicht und einer unteren Kaltschicht erzeugt wird.

22. Betriebsverfahren nach Anspruch 21, **dadurch gekennzeichnet, dass** die Warmschicht auf eine Temperatur gebracht wird, die im Wesentlichen einer vorgegebenen Starttemperatur eines Einfrierprozesses oder einer vorgegebenen Zieltemperatur eines Auftauprozesses entspricht, während die Kaltschicht auf eine Temperatur gebracht wird, die im Wesentlichen einer vorgegebenen Zieltemperatur des Einfrierprozesses oder einer vorgegebenen Starttemperatur des Auftauprozesses entspricht.

23. Betriebsverfahren nach einem der Ansprüche 17 bis 22, **dadurch gekennzeichnet, dass** der Kühlraum (3) aktiv beheizt wird.

24. Betriebsverfahren nach Anspruch 23, **dadurch gekennzeichnet, dass** der Kühlraum (3) nur in einem oberen Teilbereich aktiv beheizt wird.

## Claims

1. Cryo-device for freezing and/or thawing a sample (1), in particular for the cryo-preservation of a biological sample (1) comprising:
(a) a coolable cooling chamber (3) and
(b) a sample container (10), arranged in the cooling chamber (3), for temporarily receiving the sample (1) when freezing or thawing the sample (1), it being possible to set the temperature of said sample container (10) separately from the temperature of the cooling chamber (3),
**characterised by**
(c) a thermally insulated, extractable transport container (17), arranged in the cooling chamber (3), for extracting the sample (1) from the cooling chamber (3) after freezing or for inserting said sample into the cooling chamber (3) for thawing.

2. Cryo-device according to claim 1, **characterised by** a lifting apparatus (11) with which the sample container (10) can be lowered and/or raised in the cooling chamber (3) in a controlled or regulated manner.

3. Cryo-device according to either of the preceding claims, **characterised in that** the sample container (10) has a temperature sensor (12, 28-31) which measures the temperature in the sample container (10).

4. Cryo-device according to claim 3, **characterised in that** a plurality of temperature sensors (28-31) are attached to the sample container (10) at different vertical distances from said sample container (10) in order to determine a local vertical temperature gradient in the cooling chamber (3).

5. Cryo-device according to claim 1, **characterised in that in that** the sample container (10) is arranged so as to be fixed in place on the floor of the cooling chamber (3).

6. Cryo-device according to any one of the preceding claims, **characterised by** a heating apparatus (19) for heating the cooling chamber (3).

7. Cryo-device according to claim 6, **characterised in that** the heating apparatus (19) heats only an upper portion of the cooling chamber (3), in such a way that in the cooling chamber (3), a vertical temperature stratification with a lower cold layer and an upper warm layer results, the warm layer having a temperature which corresponds substantially to a specified starting temperature of a freezing process or a specified target temperature of a thawing process, whilst the cold layer has a temperature which corresponds substantially to a specified target temperature of the freezing process or a specified starting temperature of the thawing process.

8. Cryo-device according to any one of the preceding claims, **characterised in that** the cooling chamber (3) can be cooled by a first cooling apparatus (5, 6) whereas the sample container (10) can be cooled by a second cooling apparatus (14).

9. Cryo-device according to any one of the preceding claims, **characterised by** a control apparatus (12, 13), said control apparatus (12, 13) being connected on the output side to the first cooling apparatus (5, 6) and/or to the second cooling apparatus (14) and adjusting the cooling capacity thereof, whilst the control apparatus (12, 13) is connected on the input side to a temperature sensor (12, 28-31) of the sample container (10).

10. Cryo-device according to any one of the preceding claims, **characterised in that** the sample container (10) is thermally insulated and has a cover (15) which can be opened in order to extract the sample (1) and in order to insert the sample (1) and can be closed in order to insulate the sample container (10) thermally during cooling.

11. Cryo-device according to any one of claims 1 to 9, **characterised in that** the sample container (10) is not thermally insulated with respect to the cooling chamber (3).

12. Cryo-device according to any one of the preceding claims, **characterised in that** a substantially vertically extending shaft (25) with a wall of a heat-conducting material is arranged in the cooling chamber (3), the sample container (10) being able to move vertically in the shaft (25).

13. Cryo-device according to any one of the preceding claims, **characterised in that** the transport container (17) is arranged on the floor of the cooling chamber (3).

14. Cryo-device according to any one of the preceding claims, **characterised in that** the cooling chamber (3) is vat-shaped and is covered on the upper side thereof by a removable protective hood (9).

15. Cryo-device according to claim 14, **characterised in that in that** the protective hood (9) is transparent at least in part.

16. Cryo-device according to any one of the preceding claims, **characterised in that** a plurality of storage surfaces (20, 21) are arranged in the cooling chamber (3) at different heights, which correspond to different temperatures.

17. Operating method for a cryo-device, in particular for the cryo-preservation of a biological sample (1), comprising the following steps:
- inserting the sample (1) into a sample container (10) which is arranged in a coolable cooling chamber (3),
- setting a temperature of the sample (1) located in the sample container (10),
- extracting the sample (1) from the sample container (10), the temperature of the sample container (10) being set separately from that of the cooling chamber (3), between the insertion of the sample (1) and the extraction of the sample (1),
**characterised in that**
in order to freeze the sample (1)
- the lower region of the cooling chamber (3) is cooled down to a specified target temperature of a freezing process,
- the sample container (10) is cooled down from a specified starting temperature of the freezing process to the target temperature of the freezing process,
- the sample (1) is transferred, after the target temperature of the freezing process has been reached, into a thermally insulated transport container (17) located in the cooling chamber (3), and
- the transport container (17) along with the sample (1) located therein is extracted from the cooling chamber (3),
and/or
in order to thaw the sample (1)
- the lower region of the cooling chamber (3) is cooled down to a specified target temperature of a freezing process,
- a thermally insulated transport container (17) along with the sample (1) located therein is inserted into the cooling chamber (3),
- the sample (1) is transferred out of the transport container (17) into the sample container (10),
- the sample container (10) is heated up from a specified starting temperature of a thawing process to a specified target temperature of the thawing process, and
- the sample (1) is extracted from the sample container (10) after the target temperature of the thawing process has been reached.

18. Operating method according to claim 17, **characterised in that** the sample container (10) is raised and/or lowered in the cooling chamber (3).

19. Operating method according to claim 17, **characterised in that** the temperature of the sample container (10) is set by raising or lowering said sample container (10) in the cooling chamber (3) in a controlled or regulated manner.

20. Operating method according to either claim 17 or claim 18, **characterised in that** the sample container (10) is actively cooled by a cooling apparatus (14).

21. Operating method according to any one of claims 17 to 20, **characterised in that** a vertical temperature stratification with an upper warm layer and a lower cold layer is produced in the cooling chamber (3).

22. Operating method according to claim 21, **characterised in that** the warm layer is brought to a temperature which corresponds substantially to a specified starting temperature of a freezing process or a specified target temperature of a thawing process, whilst the cold layer is brought to a temperature that corresponds substantially to a specified target temperature of the freezing process or a specified starting temperature of the thawing process.

23. Operating method according to any one of claims 17 to 22, **characterised in that** the cooling chamber (3) is actively heated.

24. Operating method according to claim 23, **characterised in that** the cooling chamber (3) is actively heated only in an upper portion.

## Revendications

1. Dispositif cryogénique pour la congélation et/ou la décongélation d'un échantillon (1), en particulier pendant la cryoconservation d'un échantillon biologique (1), avec
a) une chambre froide refroidissable (3) et
b) un conteneur d'échantillons (10) disposé dans la chambre froide (3) pour la réception temporaire de l'échantillon (1) lors de la congélation ou de la décongélation de l'échantillon (1), dans lequel le conteneur d'échantillons (10) peut être soumis à une thermostatisation séparé de la chambre froide (3),
**caractérisé par**
c) un conteneur de transport (17) amovible thermiquement isolé qui est placé dans la chambre froide (3) pour prélever l'échantillon (1) hors de la chambre froide (3) après la congélation ou pour l'introduire dans la chambre froide (3) pour la décongélation.

2. Dispositif cryogénique selon la revendication 1, **caractérisé par** un dispositif de levage (11) au moyen duquel le conteneur d'échantillons (10) peut être abaissé et/ou soulevé de manière commandée ou régulée dans la chambre froide (3).

3. Dispositif cryogénique selon l'une quelconque des revendications précédentes, **caractérisé en ce que** le conteneur d'échantillons (10) comporte un capteur de température (12, 28-31) qui mesure la température dans le conteneur d'échantillons (10).

4. Dispositif cryogénique selon la revendication 3, **caractérisé en ce que** plusieurs capteurs de température (28-31) sont disposés sur le conteneur d'échantillons (10) à une distance verticale variable par rapport au conteneur d'échantillons (10) pour déterminer un gradient de température vertical local dans la chambre froide (3).

5. Dispositif cryogénique selon la revendication 1, **caractérisé en ce que** le conteneur d'échantillons (10) est disposé de manière stationnaire sur le fond de la chambre froide (3).

6. Dispositif cryogénique selon l'une quelconque des revendications précédentes, **caractérisé par** un dispositif de chauffage (19) pour le chauffage de la chambre froide (3).

7. Dispositif cryogénique selon la revendication 6, **caractérisé en ce que** le dispositif de chauffage (19) ne chauffe qu'une zone supérieure partielle de la chambre froide (3), de sorte qu'il en résulte une stratification thermique verticale dans la chambre froide (3) avec une couche inférieure froide et une couche supérieure chaude, la couche chaude présentant une température qui correspond sensiblement à une température initiale prédéterminée d'un processus de congélation ou à une température cible prédéterminée d'un processus de décongélation, alors que la couche froide présente une température qui correspond sensiblement à une température cible prédéterminée du processus de congélation ou à une température initiale prédéterminée du processus de décongélation.

8. Dispositif cryogénique selon l'une quelconque des revendications précédentes, **caractérisé en ce que** la chambre froide (3) peut être refroidie par un premier dispositif de refroidissement (5, 6) alors que le conteneur d'échantillons (10) peut être refroidi par un second dispositif de refroidissement (14).

9. Dispositif cryogénique selon l'une quelconque des revendications précédentes, **caractérisé par** un dispositif de commande (12, 13), le dispositif de commande (12, 13) étant raccordé, du côté sortie, au premier dispositif de refroidissement (5, 6) et/ou au second dispositif de refroidissement (14) et ajustant leur puissance de refroidissement, alors que le dispositif de commande (12, 13) est raccordé, du côté entrée, au capteur de température (12, 28-31) du conteneur d'échantillons (10).

10. Dispositif cryogénique selon l'une quelconque des revendications précédentes, **caractérisé en ce que** le conteneur d'échantillons (10) est isolé thermiquement et comporte un couvercle (15) qui peut être ouvert pour le prélèvement de l'échantillon (1) et pour l'introduction de l'échantillon (1) et qui peut être fermé pour l'isolation thermique du conteneur d'échantillons (10) lors du refroidissement.

11. Dispositif cryogénique selon l'une quelconque des revendications 1 à 9, **caractérisé en ce que** le conteneur d'échantillons (10) n'est pas isolé thermiquement par rapport à la chambre froide (3).

12. Dispositif cryogénique selon l'une quelconque des revendications précédentes, **caractérisé en ce qu'**un compartiment (25) s'étendant sensiblement verticalement avec une paroi faite en un matériau conducteur est disposé dans la chambre froide (3), le conteneur d'échantillons (10) étant mobile verticalement dans le compartiment (25).

13. Dispositif cryogénique selon l'une quelconque des revendications précédentes, **caractérisé en ce que** le conteneur de transport (17) est disposé sur le fond de la chambre froide (3).

14. Dispositif cryogénique selon l'une quelconque des revendications précédentes, **caractérisé en ce que** la chambre froide (3) a la forme d'une cuve et elle est recouverte par un capot de protection amovible (9) sur son côté supérieur.

15. Dispositif cryogénique selon la revendication 14, **caractérisé en ce que** le capot de protection (9) est au moins partiellement transparent.

16. Dispositif cryogénique selon l'une quelconque des revendications précédentes, **caractérisé en ce que** plusieurs surfaces d'appui (20, 21) sont disposées dans la chambre froide (3) à des hauteurs différentes qui correspondent à des températures différentes.

17. Procédé de fonctionnement pour un dispositif cryogénique, en particulier pour la cryoconservation d'un échantillon biologique (1), avec les étapes suivantes :
- introduction de l'échantillon (1) dans un conteneur d'échantillons (10) qui est disposé dans une chambre froide refroidissable (3),
- thermostatisation de l'échantillon (1) placé dans le conteneur d'échantillons (10),
- prélèvement de l'échantillon (1) hors du conteneur d'échantillons (10), le conteneur d'échantillons (10) étant soumis à une thermostatisation séparé de la chambre froide (3) entre l'introduction de l'échantillon (1) et le prélèvement de l'échantillon (1),
**caractérisé en ce que**
pour la congélation de l'échantillon (1)
- la chambre froide (3) est refroidie dans la zone inférieure à une température cible prédéterminée d'un processus de congélation,
- le conteneur d'échantillons (10) est refroidi à partir d'une température initiale prédéterminée du processus de congélation jusqu'à la température cible du processus de congélation,
- après avoir atteint la température cible du processus de congélation, l'échantillon (1) est transféré dans un conteneur de transport (17) thermiquement isolé se trouvant dans la chambre froide (3) et
- le conteneur de transport (17) avec l'échantillon (1) se trouvant dedans est enlevé de la chambre froide (3),
et/ou
pour la décongélation de l'échantillon (1)
- la chambre froide (3) est refroidie dans la zone inférieure à une température cible prédéterminée d'un processus de congélation,
- un conteneur de transport (17) thermiquement isolé avec l'échantillon (1) se trouvant dedans est introduit dans la chambre froide (3),
- l'échantillon (1) est transféré hors du conteneur de transport (17) dans le conteneur d'échantillons (10),
- le conteneur d'échantillons (10) est réchauffé à partir d'une température initiale prédéterminée d'un processus de décongélation jusqu'à une température cible prédéterminée du processus de décongélation,
- après avoir atteint la température cible du processus de décongélation, l'échantillon (1) est enlevé du conteneur d'échantillons (10).

18. Procédé de fonctionnement selon la revendication 17, **caractérisé en ce que** le conteneur d'échantillons (10) est abaissé et/ou soulevé dans la chambre froide (3).

19. Procédé de fonctionnement selon la revendication 17, **caractérisé en ce que** le conteneur d'échantillons (10) est soumis à une thermostatisation **en ce que** le conteneur d'échantillons (10) est abaissé ou soulevé de manière commandée ou régulée dans la chambre froide (3).

20. Procédé de fonctionnement selon l'une quelconque des revendications 17 ou 18, **caractérisé en ce que** le conteneur d'échantillons (10) est refroidi activement par un dispositif de refroidissement (14).

21. Procédé de fonctionnement selon l'une quelconque des revendications 17 à 20, **caractérisé en ce qu'**une stratification thermique verticale est produite dans la chambre froide (3) avec une couche supérieure chaude et une couche inférieure froide.

22. Procédé de fonctionnement selon la revendication 21, **caractérisé en ce que** la couche chaude est amenée à une température qui correspond sensiblement à une température initiale prédéterminée d'un processus de congélation ou à une température cible prédéterminée d'un processus de décongélation, alors que la couche froide est amenée à une température qui correspond sensiblement à une température cible prédéterminée du processus de congélation ou à une température initiale prédéterminée du processus de décongélation.

23. Procédé de fonctionnement selon l'une quelconque des revendications 17 à 22, **caractérisé en ce que** la chambre froide (3) est chauffée activement.

24. Procédé de fonctionnement selon la revendication 23, **caractérisé en ce que** la chambre froide (3) est chauffée activement seulement dans une zone supérieure partielle.
